# EUROPEAN PATENT SPECIFICATION

(11) **EP 3 150 165 B1**
(45) Date of publication and mention of the grant of the patent: **08.05.2019**
(21) Application number: 15799466.6
(22) Date of filing: 28.05.2015
(51) Int. Cl.: A61C 19/04, A61C 9/00

(54) **DENTAL OCCLUSION SAMPLING TOOL**
ZAHNÄRZTLICHER OKKLUSIONSPROBENEHMER
OUTIL D'ÉCHANTILLONNAGE D'OCCLUSION DENTAIRE

(30) Priority: 29.05.2014 JP 2014111662
(43) Date of publication of application: 05.04.2017
(73) Proprietor: GC Corporation, Bunkyo-ku Tokyo 113-0033 (JP)
(72) Inventor: KAMOHARA, Hiroshi, Tokyo 174-8585 (JP)
(74) Representative: Müller-Boré & Partner Patentanwälte PartG mbB
(86) International application number: PCT/JP2015/065340
(87) International publication number: WO 2015/182684

(56) References cited:
- WO-A1-2013/135927
- WO-A2-2008/043056
- JP-A- S58 116 354
- JP-A- 2006 305 125
- US-A- 2 418 648
- US-A1- 2008 072 916
- US-A1- 2010 055 634
- US-A1- 2013 280 672
- US-A1- 2013 280 672

## Description

### TECHNICAL FIELD

The present invention relates to bite registration tools for taking occlusal positions easily and accurately in dental treatment.

### BACKGROUND ART

In dental treatment, especially in making complete dentures and the like for an edentulous patient, an impression is normally taken at first for each of upper and lower alveolar ridges, and from the impression, a plaster model of the oral cavity is made. Then, by means of the plaster model, bite plates are made from base plates and wax rims. By means of the bite plates, adjustment with the occlusal condition of the patient is carried out. The adjustment is carried out with reference to an impression to which the occlusal condition of the patient is transferred, which is obtained by a bite registration. After that, by normal procedures such as arrangement of artificial teeth, a dental prosthesis like a complete denture is made. With the above processes, a dental prosthesis that reproduces the patient's occlusion and can be attached and used more comfortably is made.

The bite registration carried out here requires skills and experiences, which greatly differ depending on the operator. Thus, problems may occur, for example accurate bite registration is not carried out and as a result a dental prosthesis which does not fit the patient is provided, or the bite registration needs to be carried out again to make a new complete denture.

Patent Literature 1 discloses a jig including integrated dummy teeth copying an average shape of anterior teeth, in order to carry out a more accurate bite registration. According to this, the center, the occlusal plane and the like can be accurately determined by the attachment of the jig to the bite plates, in a bite registration.

### Citation List

### Patent Literatures

Patent Literature 1: JP 2004-8487 A

US 2013/280672 A1 discloses a bite registration tool comprising two plates that are arranged having a distance therebetween.

### SUMMARY OF INVENTION

### Technical Problem

However, the occlusal position needs to be determined based on the individual condition of each patient. The jig in Patent Literature 1, which is based on the normal shape, does not always correspond to the patient. Specifically, the tool used in a bite registration sometimes has an unintentional inclination, and the inclination needs to be separately adjusted corresponding to the positions of the patient's nose, eyes and ears. Conventional tools such as the jig of Patent Literature 1 do not have means for adjusting the inclination for each patient, and the operators need to adjust the inclination by their own way, for example by using another tool.

An object of the present invention is to provide a bite registration tool configured to adjust its inclination in taking a bite registration and with which an accurate bite registration can be taken.

### Solution to Problem

Hereinafter the present invention will be described. In order to make the present invention easy to understand, reference numerals given in the accompanying drawings are shown here in parentheses. However, the present invention is not limited to this.

The present invention is a bite registration tool according to claim 1.

In the present invention, the at least one ridge (26, 27) includes at least two ridges provided in directions orthogonal to each other.

### Advantageous Effects of Invention

According to the bite registration tool of the present invention, by means of the ridges, the horizontality, verticality and so on can be confirmed from the positional relationship and so on of the ridges with a patient's nose, eyes, ears and so on, in taking a bite registration. This makes it possible to prevent defects caused by unintentional inclination of the tool in taking a bite registration, and accurate bite registrations can be taken.

### BRIEF DESCRIPTION OF DRAWINGS

Fig. 1A is a perspective view of a bite registration tool 10;
Fig. 1B is a perspective view of the bite registration tool 10 seen in another direction;
Fig. 2A is an exploded perspective view of the bite registration tool 10 seen from the same viewpoint as in Fig. 1A;
Fig. 2B is an exploded perspective view of the bite registration tool 10 seen from the same viewpoint as in Fig. 1B;
Fig. 3 is a plan view of the bite registration tool 10;
Fig. 4 is an exploded plan view of the bite registration tool 10;
Fig. 5 is a front view of the bite registration tool 10;
Fig. 6 is a cross-sectional view of the bite registration tool 10;
Fig. 7 is a plan view of the bite registration tool 10 in another posture; and
Fig. 8 is a view to explain a scene of a bite registration by means of the bite registration tool 10.

### DESCRIPTION OF EMBODIMENTS

Hereinafter the present invention will be described based on the embodiments shown in the drawings. However, the present invention is not limited to these embodiments.

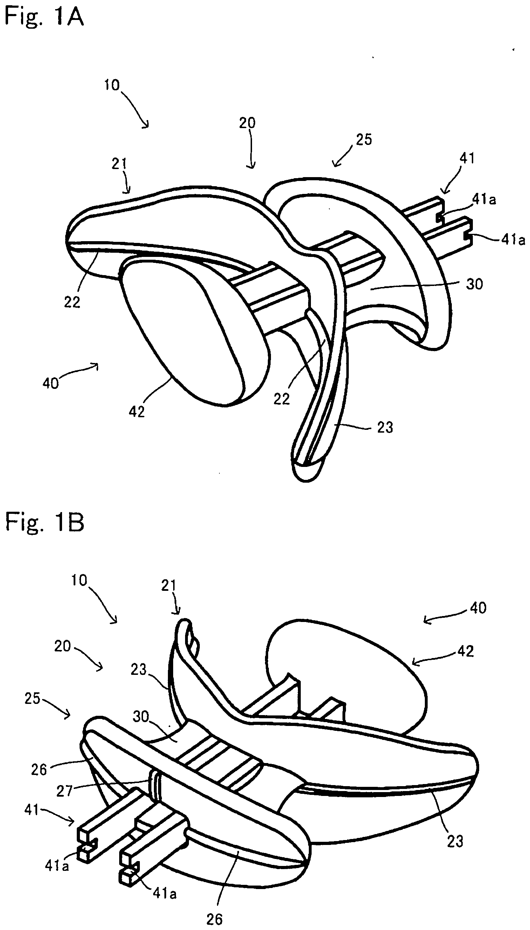

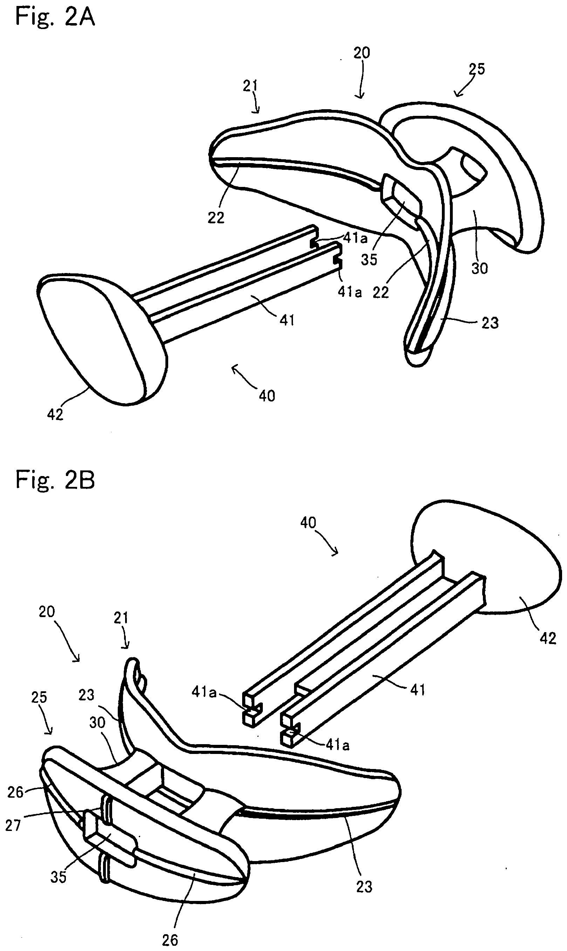

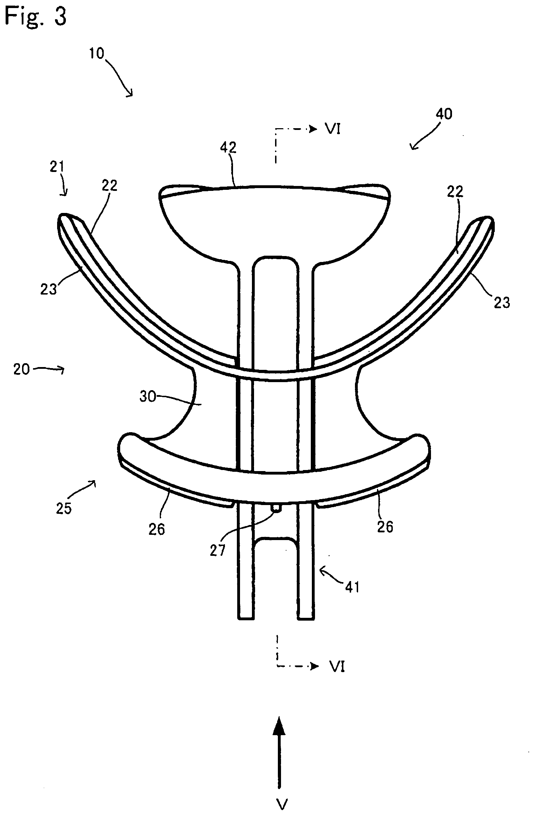

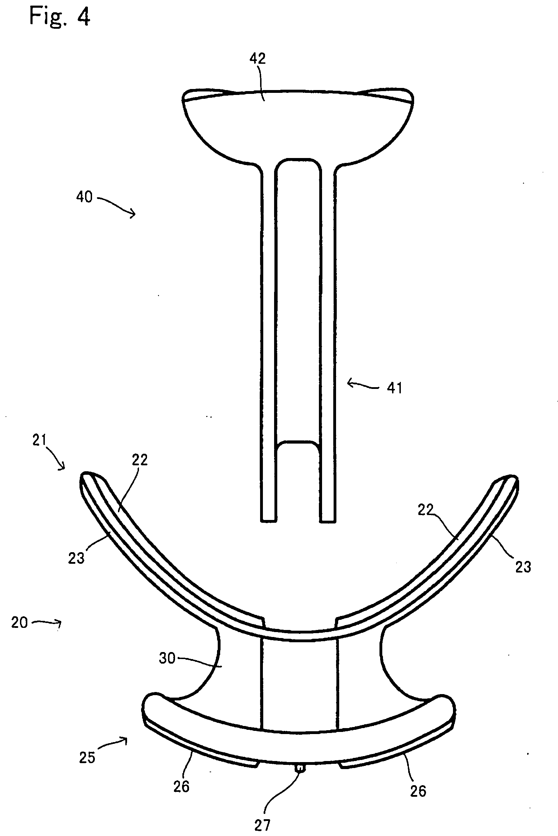

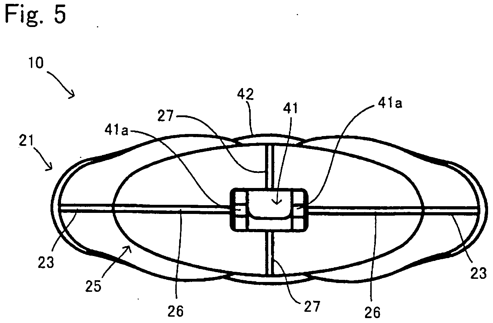

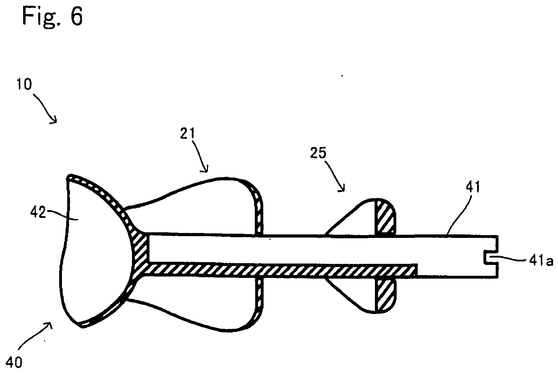

Fig. 1 includes perspective views of the appearance of a bite registration tool 10 according to one embodiment. Fig, 1A is a perspective view seen from one viewpoint and Fig. 1B is a perspective view seen from another viewpoint. Fig. 2 includes exploded perspective views of the bite registration tool 10. Fig. 2A is in the same viewpoint as in Fig. 1A and Fig. 2B is in the same viewpoint as in Fig. 1B. Fig. 3 is a plan view of the bite registration tool 10. Fig. 4 is an exploded plan view in the same viewpoint as in Fig. 3. Fig. 5 is a front view of the bite registration tool 10, seen in the direction shown by the arrow V in Fig. 3. Fig. 6 is a cross-sectional view taken along the arrows VI-VI in Fig. 3 and seen in the direction of the arrows.

As seen from the views, the bite registration tool 10 includes a main body 20 and a shaft for adjustment 40.

The main body 20 is a member for keeping the bite registration tool 10 at a proper position in an oral cavity. The main body 20 includes a rear curved plate 21, a front curved plate 25 and a coupling 30. The main body 20 is provided with a through hole 35 penetrating the rear curved plate 21, the front curved plate 25 and the coupling 30 at a linear axis.

The rear curved plate 21 is a plate-like member to be arranged between upper and lower alveolar ridges and cheeks (lips) in an oral cavity. Corresponding to the shape of the part in the oral cavity, the rear curved plate 21 is curved like a bow, in a manner that one plate surface is concave and the other plate surface is convex. Because the rear curved plate 21 is to be arranged in an oral cavity, it is preferable that the plate be tapered toward the ends of the plate in the curving direction, and it is more preferable that, in addition to this, the plate be formed in a manner to be recessed at the center so that the plate width is narrowed at the center portion in the curving direction. It is preferable that the rear curved plate 21 be formed thin and the thickness of the plate be in the range of from 1 mm to 2 mm, because the rear curved plate 21 is to be arranged between upper and lower alveolar ridges and cheeks (lips). These structures can reduce resistance in arranging the rear curved plate 21 in an oral cavity.

Both of the front and back plate surfaces of the rear curved plate 21 are provided with a ridge 22 (on the concave surface side) or a ridge 23 (on the convex surface side) that are protrusions extending along the curving direction. It is preferable that the ridges 22 and 23 extend horizontally in the curving direction. The positions of the ridges 22 and 23 in the direction orthogonal to the curving direction of the rear curved plate 21 (vertical direction of the sheet plane of Fig. 5) are not particularly limited, and preferably are the same as that of the axis of the through hole 35 in a planer view (viewpoint in Fig. 5).

Each length, width, and height of protrusion of the ridges 22 and 23 are not particularly limited. The length may be long enough for the ridges 22 and 23 reach the both ends of the rear curved plate 21 in the curving direction. The width and height of protrusion may be approximately 1 mm.

It is noted that the ridges 22 and 23 do not have to be provided.

The front curved plate 25 is a plate-like member to be arranged having a predetermined gap from the rear curved plate 21. In this embodiment, the front curved plate 25 is curved like a bow so that one plate surface is concave and the other plate surface is convex. Here, the front curved plate 25 is arranged in such a manner that the concave surface thereof faces to the convex surface of the rear curved plate 21. The gap between the front curved plate 25 and the rear curved plate 21 is formed larger than the thickness of normal lips, because upper and lower lips are to be arranged between the front curved plate 25 and the rear curved plate 21. In this embodiment, though not particularly limited, the front curved plate 25 is formed in an ellipse in a front view (viewpoint in Fig. 5). This makes it easier to reduce resistance when the bite registration tool 10 is arranged in an oral cavity.

In addition, the front curved plate 25 is provided with a ridge 26 that is a protrusion extending along the curving direction, at least on the surface to be convex (opposite side of the surface facing to the rear curved plate 21). It is preferable that the ridge 26 extend horizontally in the curving direction. This makes it possible to provide an indicator for adjusting the inclination of the bite registration tool 10 when a bite registration is taken. The ridge 26 also functions as a rib to reinforce the front curved plate 25, inhibiting the front curved plate 25 from bending.

The position of the ridge 26 in the direction orthogonal to the curving direction of the front curved plate 25 (vertical direction of the sheet plane of Fig. 5) is not particularly limited, and preferably is the same as that of the axis of the through hole 35 in a planer view (viewpoint in Fig. 5). In this case, the ridge 26 forms a straight line with the ridge 23 of the rear curved plate 21 in a planer view (viewpoint in Fig. 5).

Further, the front curved plate 25 is provided with a ridge 27 which is a protrusion extending along the direction orthogonal to the curving direction, at least on the surface to be convex (opposite side of the surface facing to the rear curved plate 21). It is preferable that the ridge 27 be orthogonal to the curving direction and extend in a direction orthogonal to the ridge 26 in a planer view (viewpoint in Fig. 5). The position of the ridge 27 in the curving direction (horizontal direction of the sheet plane in Fig. 5) of the front curved plate 25 is not particularly limited, and preferably is the same as that of the axis of the through hole 35 in a planer view (viewpoint in Fig. 5). With the ridge 27, the midline can be adjusted in taking a bite registration.

Each length, width, and height of protrusion of the ridges 26 and 27 are not particularly limited. The length may be long enough for the ridges 26 and 27 to reach the ends of the front curved plate 25. The width and height of protrusion may be approximately 1 mm.

The coupling 30 is a member to couple the front curved plate 25 and the rear curved plate 21 in a manner to keep their positional relationship described above. The coupling 30 couples the front curved plate 25 and the rear curved plate 21 at their center portions in a direction orthogonal to the curving direction (vertical direction in the viewpoint in Fig. 5). This forms a gap between the front curved plate 25 and the rear curved plate 21, the gap in which lips are to be arranged when the bite registration tool 10 is used.

The through hole 35 is a hole penetrating the front curved plate 25, the coupling 30 and the rear curved plate 21, along one linear axis. The through hole 35 has a cross section having such a size and shape that a shaft 41 of the shaft for adjustment 40 can penetrate the hole. It is preferable that the through hole 35 be provided at a base portion of the concave (top portion of the convex) of the curve at the front curved plate 25 and the rear curved plate 21.

The main body 20 is to be sandwiched by upper and lower lips which are soft. Thus, it is preferable that the main body 20 be formed of a material having both softness and strength, such as resin. In addition, because the main body 20 is to be arranged in an oral cavity, it needs to be harmless to humans, and is preferably hard to break or deform even though an autoclave treatment is carried out thereto, so that the main body 20 can be reused.

The shaft for adjustment 40 is a member to shift the position of a tongue holder 42 included in the shaft for adjustment 40. The shaft for adjustment 40 includes a shaft 41 and the tongue holder 42.

The shaft 41 is a rod-like member movably keeping the tongue holder 42 to the main body 20. The shaft 41 has a cross section having such a size and shape as to penetrate the above-described through hole 35. The specific cross-sectional shape is not particularly limited, and in this embodiment, the shaft 41 has a U-shaped cross section, in which two plates extending horizontally are coupled by another plate at their one ends.

The length of the shaft 41 is long enough for the shaft 41 to penetrate the through hole 35, in such a manner that one end of the shaft 41 projects from the rear curved plate 21 and the other end of the shaft 41 projects from the front curved plate 25.

The tongue holder 42 is a container-shaped (bowl-shaped) member arranged at one end of the shaft 41, the end on the rear curved plate 21 side. The top portion of the convex side of the tongue holder 42 is arranged at the end of the shaft 41.

Meanwhile, at the other end of the shaft 41, the other end projecting from the front curved plate 25 side, a stopper which is not shown may be formed in order to prevent the shaft 41 from coming off from the through hole 35. The specific form of the stopper is not particularly limited, and for example, a part of the other end may be formed large, a protrusion may be formed, and a circular rubber may be arranged.

In addition, at the other end of the shaft 41, the other end projecting from the front curved plate 25 side, a notch 41a may be provided at the same position as that of the ridge 26 of the front curved plate 25 in a planer view (viewpoint in Fig. 5). This makes it easy to see the ridge 26 through the notch 41a even with the shaft 41, when adjustments of the inclination are carried out with the ridge 26.

For the material of the shaft for adjustment 40, the same material as that of the main body 20 may be used.

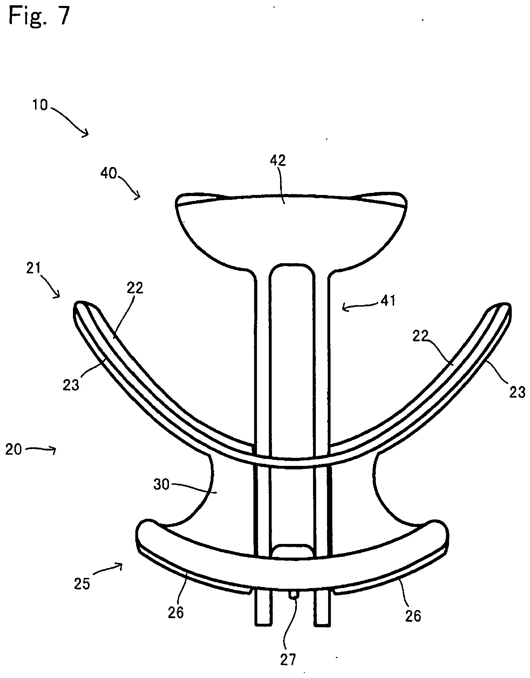

In the bite registration tool 10 described above, the tongue holder 42 can be moved by shifting of the shaft 41 of the shaft for adjustment 40 in the axis direction in the through hole 35 as shown in Fig. 7. Thus, it is possible to change the relative position of the tongue holder 42 to the rear curved plate 21.

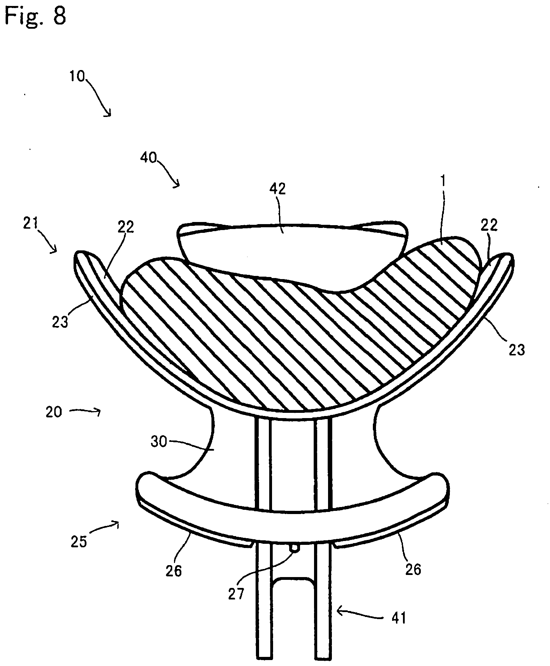

The bite registration tool 10 may be used in the following manner for example. In making a complete denture for an edentulous patient by means of the bite registration tool 10, an impression material 1 is heaped between the rear curved plate 21 and the tongue holder 42 as shown in Fig. 8, and inserted in the patient's oral cavity. At this time, the impression material 1 is kept more firmly because of the ridge 22 of the rear curved plate 21 and the cross-sectional shape (U shape) of the shaft 41 described above.

Then, the patient is asked to close his/her mouth in a manner to sandwich the coupling 30 positioned between the rear curved plate 21 and the front curved plate 25 of the main body 20, by the upper and lower lips. Whereby, the portion between the upper and lower alveolar ridges are filled with the impression material 1. At this time, the rear curved plate 21 is arranged in a manner to be sandwiched by the lips and alveolar ridges, and the front curved plate 25 is arranged in a manner to be exposed in front of the patient's face, having contact with the lips. In this manner, it is possible to easily take a bite registration, only by slowly closing the mouth with the upper and lower lips fixed at one position, without making the upper and lower jaws in unnatural positions.

At this time, with the bite registration tool 10, by means of the ridges 26 and 27 of the front curved plate 25 to be arranged outside the oral cavity, the horizontality and verticality can be confirmed and adjusted, from the positional relationship and so on of the ridges 26 and 27 with the patient's nose, eyes, ears and so on. This makes it possible to prevent defects caused by unintentional inclinations when a bite registration is taken. In addition, the midline may be adjusted by the ridge 27.

Here, in the bite registration, the patient puts the tip of his/her tongue inside the container shape of the tongue holder 42. At this time, the patient can put the tongue at a more natural position because the tongue holder 42 can move, and a more natural occlusion can be made. Thus, a more accurate bite registration can be taken.

Meanwhile, separately from the bite registration, an impression model of the oral cavity and bite plates arranged to the model are preliminarily made by a general method, and arranged on an articulator. Then, based on the impression obtained by the above bite registration, the sizes and positions of artificial teeth are determined. The artificial teeth are arranged, whereby a denture is made.

As a method of making a denture without using impression models and articulators, a method of: converting an impression of the upper and lower alveolar ridges inside an oral cavity, which is preliminarily obtained, and an impression obtained by a bite registration into electric data by three-dimensional shape measurement; determining the sizes and positions of artificial teeth on computer; and thereafter making a denture by a NC machining tool, and the like may be given.

### Description of Reference Numerals

- 1: impression material
- 10: bite registration tool
- 20: main body
- 21: rear curved plate
- 22: ridge
- 23: ridge
- 25: front curved plate
- 26: ridge
- 27: ridge
- 30: coupling
- 35: through hole
- 40: shaft for adjustment
- 41: shaft
- 42: tongue holder

## Claims

1. A bite registration tool (10) comprising two plates (21, 25) that are arranged having a distance therebetween, **characterized in that**:
one of the plates is a rear curved plate (21) that has a curved plate shape and is to be arranged between lips and alveolar ridges of a patient; and
the other plate is a front curved plate (25) that has a plate shape, arranged in a manner that one plate surface of the front curved plate (25) faces to the rear curved plate (21) having a predetermined gap, to be arranged forward having contact with the lips,
wherein
the other plate surface of the front curved plate (25) is provided with at least two ridges (26, 27) provided in directions orthogonal to each other protruding from the other plate surface and extending along the other plate surface.

## Patentansprüche

1. Bissregistrierwerkzeug (10), umfassend zwei Platten (21, 25), die mit einem Abstand dazwischen angeordnet sind, **dadurch gekennzeichnet, dass**:
eine der Platten eine hintere gekrümmte Platte (21) ist, die eine gekrümmte Plattenform aufweist und zwischen Lippen und Alveolarkämmen eines Patienten anzuordnen ist; und
die andere Platte eine vordere gekrümmte Platte (25) ist, die eine Plattenform aufweist, die so angeordnet ist, dass eine Plattenoberfläche der vorderen gekrümmten Platte (25) der hinteren gekrümmten Platte (21) mit einem vorbestimmten Spalt zugewandt ist, die nach vorne in Kontakt mit den Lippen anzuordnen ist,
wobei
die andere Plattenoberfläche der vorderen gekrümmten Platte (25) mit mindestens zwei Rippen (26, 27) versehen ist, die in zueinander orthogonalen Richtungen aus der anderen Plattenoberfläche herausragend und sich entlang der anderen Plattenoberfläche erstreckend bereitgestellt sind.

## Revendications

1. Outil d'enregistrement occlusal (10) comprenant deux plaques (21, 25) qui sont agencées en ayant une distance entre elles, **caractérisé en ce que** :
une des plaques est une plaque courbée arrière (21) qui a une forme de plaque courbée et doit être agencée entre des lèvres et des crêtes alvéolaires d'un patient ; et
l'autre plaque est une plaque courbée avant (25) qui a une forme de plaque, agencée de sorte qu'une surface de plaque de la plaque courbée avant (25) est tournée vers la plaque courbée arrière (21) ayant un espace prédéterminé, devant être agencée vers l'avant en ayant un contact avec les lèvres,
dans lequel
l'autre surface de plaque de la plaque courbée avant (25) est pourvue d'au moins deux crêtes (26, 27) prévues dans des directions orthogonales l'une à l'autre en faisant saillie depuis l'autre surface de plaque et s'étendant le long de l'autre surface de plaque.
